(19) Europäisches Patentamt

European Patent Office

Office européen des brevets

(11) **EP 1 645 890 A1**

(12) **EUROPÄISCHE PATENTANMELDUNG**

(43) Veröffentlichungstag:
**12.04.2006 Patentblatt 2006/15**

(51) Int Cl.:
*G01S 17/32* *(2006.01)*    *G01S 7/497* *(2006.01)*
*G01S 7/491* *(2006.01)*    *G01S 7/40* *(2006.01)*

(21) Anmeldenummer: 04024127.5

(22) Anmeldetag: **09.10.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(71) Anmelder: **Leica Geosystems AG**
**9435 Heerbrugg (CH)**

(72) Erfinder:
• **Aebischer, Beat**
**9435 Heerbrugg (CH)**

• **Rohner, Marcel**
**9410 Heiden (CH)**

(74) Vertreter: **Kaminski, Susanne**
**Büchel, Kaminski & Partner**
**Patentanwälte Est.**
**Austrasse 79**
**9490 Vaduz (LI)**

(54) **Distanzmessverfahren mit Bestimmung eines nichtidealen Chirpverlaufs**

(57) In einem Distanzmessverfahren mit Aussenden frequenzmodulierter elektromagnetischer Strahlung auf wenigstens ein zu vermessendes Ziel und nachfolgendem Empfang der vom Ziel zurückgestreuten Strahlung wird der Chirp der Strahlung durch eine Phasenfunktion $\Phi(t)$ mit Parametern $c_j$ modelliert, so dass eine Abweichung des Chirps vom linearen Verlauf beschreibbar ist. Die zur Beschreibung verwendeten Parameter werden zumindest teilweise aus Messungen bestimmt bzw. bei der numerischen Signalauswertung mitgeschätzt.

*Fig. 1*

**EP 1 645 890 A1**

**Beschreibung**

Die Erfindung betrifft ein Distanzmessverfahren nach dem Oberbegriff des Anspruchs 1, eine Distanzmessvorrichtung nach dem Oberbegriff des Anspruchs 11 und ein Computerprogrammprodukt.

Im Bereich der elektronischen Distanzmessung sind verschiedene Prinzipien und Verfahren bekannt. Ein Ansatz besteht darin, frequenzmodulierte elektromagnetische Strahlung, wie z.B. Licht, auf das zu vermessende Ziel auszusenden und nachfolgend ein oder mehrere Echos von rückstreuenden Objekten, idealerweise ausschliesslich vom zu vermessenden Ziel, zu empfangen. Nach dem Empfang wird das ggf. überlagerte Echosignal mit einem Mischsignal überlagert und dadurch die zu analysierende Frequenz des Signals vermindert, so dass vorrichtungsseitig nur ein geringerer Aufwand notwendig ist. Das Mischen kann dabei entweder als homodynes Verfahren mit dem gesendeten Signal oder als heterodynes Verfahren mit einem periodischen, insbesondere harmonischen, Signal bekannter Periode erfolgen. Somit unterscheiden sich die Verfahren darin, dass mit dem Sendesignal selbst oder mit einem harmonischen Signal mit einer eigenen Frequenz gemischt wird. Die Mischung dient dazu, das empfangene Signal zu tieferen Frequenzen zu transformieren. Nachfolgend werden aus dem resultierenden Signal die Laufzeiten und damit - bei bekannter Ausbreitungsgeschwindigkeit der verwendeten Strahlung - die Distanzen zu den zu vermessenden Zielen bestimmt.

Die zur Umsetzung dieser Verfahren verwendeten Vorrichtungen nutzen üblicherweise einen Signalgenerator als Chirp-Generator, der einer modulierbaren Strahlungsquelle ein Signal aufprägt. Im optischen Bereich werden als Strahlungsquellen zumeist Laser eingesetzt. Zur Emission und zum Empfang kommen im optischen Bereich Sende-und Empfangsoptiken zum Einsatz, denen ein Detektor bzw. Empfänger mit nachfolgendem Mischer, A/D-Wandler und digitalem Signal-Prozessor nachgeschaltet ist.

Üblicherweise wird vom Signalgenerator als Signal *s(t)* ein linear frequenzmodulierter Chirp erzeugt:

$$s(t) = a + b \cdot \cos(2\pi \cdot \Phi(t)), \quad \Phi(t) = c + d \cdot t + e \cdot t^2 \qquad (1)$$

wobei die momentane Frequenz $f(t) = \dfrac{d\Phi(t)}{dt}$ dann eine lineare Funktion der Zeit ist:

$$f(t) = d + 2e \cdot t \qquad (2)$$

was die Bestimmung der Laufzeiten vereinfacht.

Im Fall von n Zielen mit relativen Amplituden $A_k$ und Laufzeiten $t_k$ (k = 1, ... , n) kann das rauschfreie Echosignal e(t) wie folgt geschrieben werden:

$$e(t) = \sum_{k=1}^{n} A_k s(t - t_k) \qquad (3)$$

Dieses Echosignal e(t) wird detektiert und mit dem Signal *m*(*t*) gemischt:

$$m(t) = \begin{cases} s(t - t_0), & \text{homodyn} \\ \cos(2\pi(f_0 t + \varphi)), & \text{heterodyn} \end{cases} \qquad (4)$$

Durch das Mischen mit m(t) entsteht das Signal

$$d(t) = \int_0^\infty h(t-t') \cdot e(t') \cdot m(t') \, dt' \qquad (5)$$

wobei h die Impulsantwort eines geeigneten Tiefpassfilters bezeichnet.

Für einen idealen Tiefpass lässt sich die Tiefpassfilterung in (5) gemäss dem Stand der Technik in sehr guter Approximation explizit ausführen, im homodynen Fall zum Beispiel folgt aus der ersten Gleichung in (1) und den Gleichungen (3) bis (5) nach Weglassen der hochfrequenten Terme

$$d(t) = d_0 + \frac{b^2}{2} \sum_{k=1}^{n} A_k \cos\left(2\pi\left[\Phi(t-t_k) - \Phi(t-t_0)\right]\right) \qquad (5')$$

mit dem Signaloffset $\;d_0 = a^2 \sum_{k=1}^{n} A_k\;$ .

Das gemischte Signal d(t) wird auf dem endlichen Messintervall $-T/2 \leq t \leq T/2$ digitalisiert und abgespeichert. Aus der Frequenz- und ggf. der Phaseninformation dieses Signals werden die Laufzeiten $t_k$ bestimmt, wobei normalerweise n als klein und eventuell auch als bekannt vorausgesetzt werden kann. Eines der Echos, z.B. das n-te, kann auch von einem fixen und bekannten Referenzziel stammen und die Zieldistanzen der restlichen Ziele werden aus den Laufzeitdifferenzen $t_k$ - $t_n$ und der bekannten Distanz des Referenzziels berechnet. Im homodynen Fall kann das Mischsignal m(t) = s(t - $t_0$) selber als Referenz dienen, $t_0$ entspricht dann der Referenzdistanz.

Im Fall eines linearen Chirps gemäss Gleichung (1) trägt das k-te Echo die momentane Frequenz

$$f_k(t) = \begin{cases} 2e(t_0 - t_k), & \text{homodyn} \\ d + 2e(t - t_k) - f_0, & \text{heterodyn} \end{cases} \qquad (6)$$

zum Signal d(t) bei. Somit können in diesem Fall aus einer - im heterodynen Fall zeitaufgelösten - Frequenzanalyse des Signals d(t) grundsätzlich die Laufzeiten $t_k$ direkt bestimmt werden, wobei die Auflösung allerdings noch grob ist. Genauere Resultate können durch die Berücksichtigung der Phaseninformation erhalten werden.

Im Stand der Technik werden solche oder ähnliche Verfahren im optischen oder Radarbereich beispielsweise in den folgenden Druckschriften beschrieben.

Aus der DE 196 10 970 A1 ist ein frequenzmoduliertes Verfahren mit kontinuierlicher Emission (FMCW-Verfahren) zur Abstandsmessung mit elektromagnetischer Strahlung im Radarbereich bekannt. Dabei wird ein zeitlinear frequenzmoduliertes (gewobbeltes) Signal ausgesandt und nach Reflexion an einem Ziel und nachfolgendem Empfang analysiert. Aus Sende- und Empfangssignal wird hierbei in einem Mischer ein Zwischenfrequenzsignal erzeugt, welches einer schnellen Fouriertransformation unterworfen wird.

EP 0 834 086 B1 beschreibt ein optisches FMCW-Abstandsmessverfahren, das bei kurzer Messzeit eine Genauigkeit im Bereich von Phasenmessverfahren aufweist. Dabei erzeugt ein Chirpgenerator beispielsweise ein linear frequenzmoduliertes Signal, das in ein Sende- und Referenzsignal aufgeteilt wird, wobei beide Signale in einem Quadraturempfänger komplex miteinander multipliziert werden.

In beiden Druckschriften - wie auch in anderen Lösungen des Stands der Technik - wird für die Auswertung ein bekannter, von der Gerätealterung unabhängiger und zeitlich linearer Verlauf der Modulationsfrequenz f(t) vorausgesetzt. Sowohl die Bedingung der Bekanntheit als auch der Alterungsunabhängigkeit und der Linearität sind vorrichtungsseitig nicht oder nur unter grossem Aufwand in der erforderlichen Genauigkeit zu realisieren.

So beschreibt beispielsweise die Offenlegungsschrift DE 100 65 657 A1 kaskadierte Phasenregelkreise zur Linearisierung von Oszillatoren mit starkem Phasenrauschen. Ziel ist dabei die Erzeugung von linearen analogen Frequenzrampen. Dennoch bleiben erzielbare Linearität und Kenntnis des Frequenzverlaufs Beschränkungen unterworfen, die auch mit grossem vorrichtungsseitigen Aufwand nicht ganz zu vermeiden sind.

Einen Chirp mit vorgegebenem Frequenzverlauf (z.B. linear) zu erzeugen, ist somit technisch aufwendig und grundsätzlich auch nicht beliebig exakt und stabil möglich. Die auftretenden Abweichungen des Sendesignals vom idealen Verhalten verursachen systematische Messfehler.

Eine Aufgabe der Erfindung besteht darin, eine Lösung bereitzustellen, die eine verbesserte Identifizierung und Kenntnis des Frequenzverlaufs und/oder eine Verringerung bzw. Vermeidung der Fehler oder deren Auswirkungen erlaubt.

Eine weitere Aufgabe der vorliegenden Erfindung ist es, bei gleichbleibender Leistung die Anforderungen an die verwendeten Komponenten zu verringern bzw. bei gleichbleibenden Komponenten die Leistung zu erhöhen.

Diese Aufgaben werden durch die Gegenstände des Anspruchs 1 bzw. 11 oder der abhängigen Ansprüche gelöst bzw. die Lösungen weitergebildet.

Die Erfindung beruht darauf, die Phasenfunktion $\Phi(t)$ durch endlich viele Parameter zu modellieren. Dies kann durch eine allgemeine Darstellung mit beliebigen Parametern $c_1,...,c_m$ gemäss

$$\Phi(t) = \Phi(t; c_1, \ldots, c_m) \qquad (7)$$

erfolgen oder zum Beispiel durch Linearkombination geeigneter Basisfunktionen $\Phi_j(t)$, insbesondere Potenzen oder orthogonale Polynome, Wavelets, diskrete Deltafunktionen an den Abtastzeitpunkten, mit den Koeffizienten $c_1...,C_m$, als lineare Parameter:

$$\Phi(t) = \sum_{j=1}^{m} c_j \Phi_j(t) \qquad (7')$$

Die zusätzlichen Parameter $c_j$ oder zumindest ein Teil der Parameter $c_j$ werden durch Messungen bestimmt, z.B. bei jeder Messung mitbestimmt, wobei diese Bestimmung auch zusammen mit allen anderen relevanten Systemparametern sowie den Laufzeiten $t_k$ erfolgen kann. Die Bestimmung aller unbekannten Parameter wird damit zu einem (statistischen) Parameterschätzproblem. Ein Beispiel für ein konkretes Bestimmungsverfahren ist das bekannte Maximum-Likelihood-Verfahren, siehe zum Beispiel §35 in B. L. van der Waerden: *Mathematische Statistik,* Springer-Verlag, Berlin, Göttingen, Heidelberg, 1957. Dabei werden die unbekannten Parameter im Modellsignal d(t) gemäss Gleichung (5') (oder allgemeiner gemäss den Gleichungen (1), (7), (3), (4) und (5)) - also $A_1$, ..., $A_n$, $t_1$, ..., $t_n$, $C_1$, ..., $c_m$ und $t_0$ bzw. $f_0$ und $\varphi$, sowie der Signaloffset $d_0$ - so bestimmt, dass die Abweichung zum tatsächlich gemessenen Signal, interpretiert als Rauschvektor, maximale Wahrscheinlichkeitsdichte hat. Im Fall von unkorreliertem normalverteiltem Rauschen, zum Beispiel, entspricht das einer (nichtlinearen) Ausgleichung nach der Methode der kleinsten Quadrate. Damit ist die Bestimmung der Parameter und der Laufzeiten $t_k$ - und damit der gesuchten Zieldistanzen - auch im allgemeinen Fall von korreliertem Rauschen auf ein nichtlineares Optimierungsproblem zurückgeführt, für dessen Lösung im Stand der Technik viele, meist iterative, Methoden bekannt sind - zum Beispiel D. W. Marquardt: *An Algorithm for Least-Squares Estimation* of *Nonlinear Parameters,* SIAM Journal on Applied Mathematics 11 (1963), 431-441 oder K. Levenberg: *A. Method for the Solution* of *Certain Non-Linear Problems in Least Squares,* Quarterly of Applied Mathematics 2 (1944), 164-168 oder auch das klassische BFGS-Verfahren und Weiterentwicklungen davon oder modernere Verfahren wie sie z.B. im Übersichtsartikel A. Forsgren, P. E. Gill, M. H. Wright: *Interior Methods for Nonlinear Optimization,* SIAM Review 44 (2002), 525-597 beschrieben sind.

Die Gewinnung von approximativen Startwerten für die iterative Optimierung kann auch basierend auf Gleichung (6) mit bekannten Methoden erfolgen, wenn die Abweichung des Chirpsignals vom linearen Fall relativ klein ist, was als häufiger Fall anzusehen ist.

Zur Verbesserung der Konditionierung des Schätzproblems, d.h. zur Erhöhung der numerischen Stabilität, wird auch die totale Phasenänderung im Sendesignal während eines bekannten Zeitintervalls $t_a \leq t \leq t_b$ - z.B. während des Messintervalls, $t_a = -T/2, t_b = T/2$ - gemäss $\Phi_{tot} = \Phi(t_b) - \Phi(t_a)$ gemessen. Im Fall von Gleichung (7') führt dies auf eine lineare Nebenbedingung

$$\sum_{j=1}^{m} \left[ \Phi_j(t_b) - \Phi_j(t_a) \right] \cdot c_j = \Phi_{tot} \qquad (8')$$

für die Koeffizienten $c_1,...,c_m$, die bei der Optimierung berücksichtigt werden kann. Im allgemeinen Fall (7) ist die nicht-

lineare Nebenbedingung

$$\Phi(t_b; c_1, \ldots, c_m) - \Phi(t_a; c_1, \ldots, c_m) = \Phi_{tot} \qquad (8)$$

bei der Optimierung zu berücksichtigen.

Die Messung von $\Phi_{tot}$ kann zum Beispiel einfach durch Zählen der Nulldurchgänge des Sendesignals realisiert werden; der Messfehler beträgt dann höchstens ½, was für die meisten Zwecke gegenüber der grossen Phasendifferenz $\Phi_{tot}$ vernachlässigbar ist. Zum Beispiel ist im Fall der Figuren 6 bis 11 mit $t_a = -T/2, t_b = T/2 : \Phi_{tot} \approx 10^5$. Mit zusätzlichem vorrichtungsseitigem Aufwand kann der Fehler bei Bedarf auch noch weiter reduziert werden, beispielsweise durch Bestimmung der Restphase mittels Rampenintegration ("single-slope integration").

Ein weiterer Vorteil dieses Ansatzes ist auch, dass kein Quadraturempfänger benötigt wird, wie er beispielsweise in EP 0 834 086 B1 als notwendige Komponente beschrieben wird.

Die Kenntnis des tatsächlichen Verlaufs des vom Signalgenerator erzeugten Signals bzw. der von der Strahlungsquelle emittierten frequenzmodulierten Strahlung erlaubt grundsätzlich zwei Ansätze. Zum einen kann der nichtlineare Anteil im Signal bereits bei der Signalerzeugung antizipiert werden, indem der Signalgenerator entsprechend angesteuert wird. Die Signalerzeugung wird somit - beispielsweise in Echtzeit - an den tatsächlich erfolgenden Signalverlauf angepasst. Zum anderen erlaubt die Kenntnis des aktuellen Fehlers auch dessen Kompensation bei der Signalverarbeitung und Distanzberechnung. Beide Ansätze können auch miteinander kombiniert werden, z.B. indem der Signalgenerator bis zu einer gewissen Schwelle an Nichtlinearität nachgeregelt wird, während die verbleibende Abweichung in Kauf genommen und rechnerseitig berücksichtigt wird.

Die erfindungsgemässe Distanzmessvorrichtung bzw. das Distanzmessverfahren wird nachfolgend anhand von in der Zeichnung schematisch dargestellten Ausführungsbeispielen rein beispielhaft näher beschrieben oder erläutert. Im einzelnen zeigen

Fig.1    die schematische Darstellung eines ersten erfindungsgemässen Ausführungsbeispiels mit elektrischem Signal als Mischsignal und einem Zähler für die totale Phase;

Fig.2    die schematische Darstellung eines zweiten erfindungsgemässen Ausführungsbeispiels mit optisch detektiertem Signal als Mischsignal und einem Zähler für die totale Phase;

Fig.3    die schematische Darstellung eines dritten erfindungsgemässen Ausführungsbeispiels mit elektrischem Signal als Mischsignal und einem Quadraturempfänger;

Fig.4    die schematische Darstellung eines vierten erfindungsgemässen Ausführungsbeispiels mit optisch detektiertem Signal als Mischsignal und einem Quadraturempfänger;

Fig.5    die schematische Darstellung der Erzeugung eines Mischterms durch die Abfolge von Überlagerung und Nichtlinearität;

Fig.6    die Darstellung des Frequenzverlaufs und des Empfangssignals für einen perfekten linearen Chirp im homodynen Fall;

Fig.7    die Darstellung einer Störung des idealen Chirps mit einem zusätzlichen Term vierter Ordnung im homodynen Fall;

Fig.8    die Darstellung von Differenzen von emittierter Frequenz und empfangenem Signal zwischen gestörtem und idealem Chirp im homodynen Fall;

Fig.9    die Darstellung des Frequenzverlaufs und des Empfangssignals für den linearen Chirp im heterodynen Fall;

Fig.10    die Darstellung einer Störung des idealen Chirps mit einem zusätzlichen Term vierter Ordnung im heterodynen Fall und

Fig.11    die Darstellung von Differenzen von emittierter Frequenz und empfangenem Signal zwischen gestörtem und idealem Chirp im heterodynen Fall.

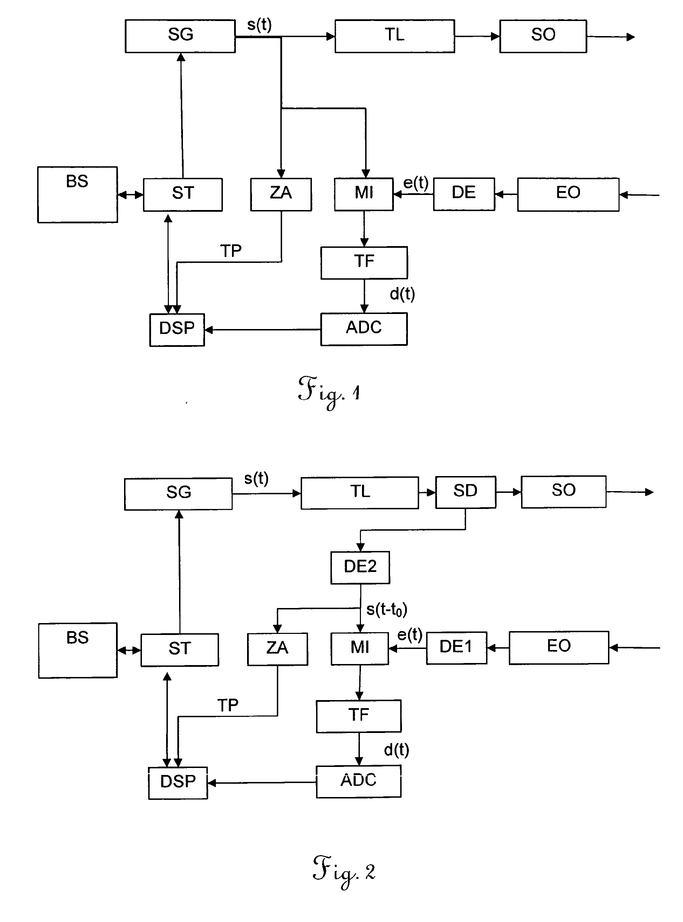

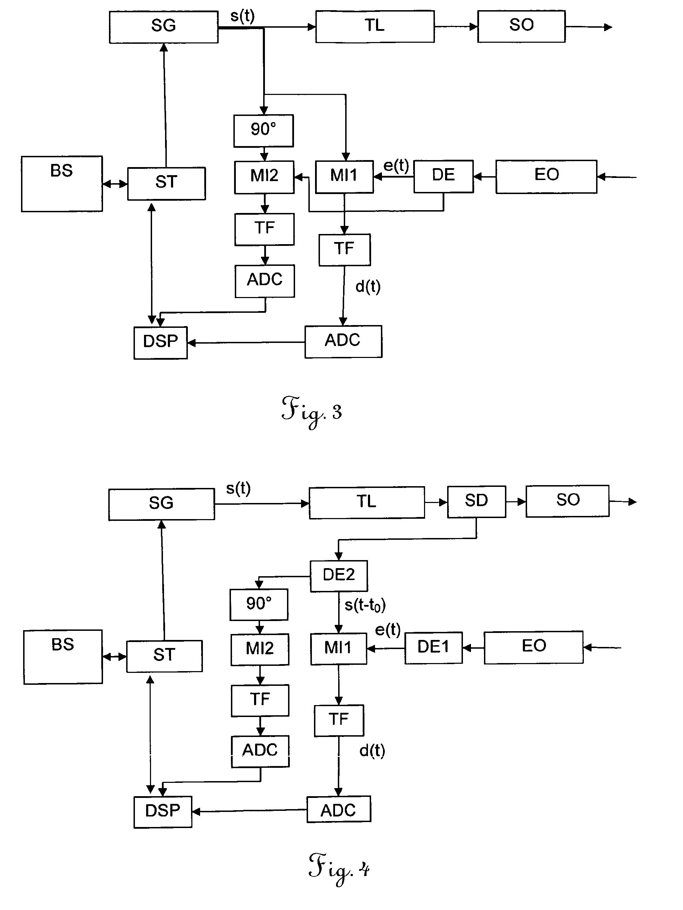

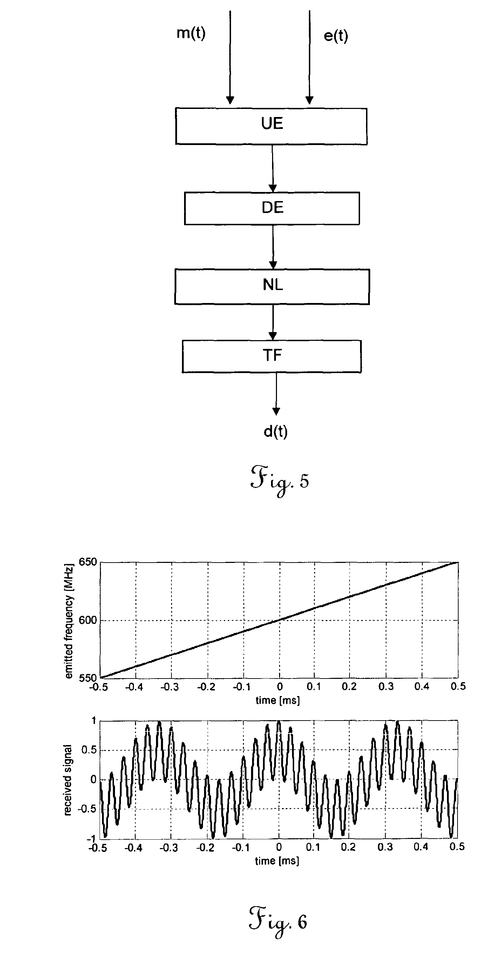

In den Fig.1 bis Fig.5 werden rein optische Ausführungsbeispiele dargestellt, bei denen die folgenden Bezugszeichen zur Kennzeichnung von Elementen der rein schematischen Darstellungen der Vorrichtungs-Komponenten verwendet werden. Dabei wird nur die homodyne Variante dargestellt. Es sind aber auch heterodyne Varianten und Vorrichtungen im nicht-optischen Spektralbereich, wie z.B. im Radar- oder Mikrowellenbereich, erfindungsgemäss realisierbar. Für die heterodyne Variante ist ein weiterer Signalgenerator bzw. ein weiterer Signalausgang erforderlich, der das zweite zum Mischen benötigte Signal generiert.

Bezugszeichenliste

| | |
|---|---|
| ADC | Analog-Digital-Wandler |
| BS | Benutzerschnittstelle |
| DE | Detektor |
| DE1 | Erster Detektor |
| DE2 | Zweiter Detektor |
| DSP | digitaler Signal-Prozessor |
| EO | Empfangsoptik |
| MI | Mischer |
| MI1 | Erster Mischer |
| MI2 | Zweiter Mischer |
| MS | Mischsignal |
| NL | Nichtlinearität |
| SD | Strahlteiler |
| SG | Signalgenerator |
| SO | Sendeoptik |
| ST | Steuerung |
| TF | Tiefpaßfilter |
| TL | Treiber und Laser |
| UE | Überlagerung |
| ZA | Zähler |
| 90° | 90°-Phasenschieber |

Fig. 1 zeigt die schematische Darstellung eines ersten erfindungsgemässen Ausführungsbeispiels mit einem Mischer MI, in den das elektrische Signal $s(t)$ des Signalgenerators SG und das Echosignal e(t) des Detektors DE eingekoppelt werden. Das Signal $s(t)$ des Signalgenerators SG wird ebenfalls verwendet, um der von Treiber und Laser TL generierten Strahlung eine Frequenzmodulation aufzuprägen. Diese Strahlung wird über eine Sendeoptik SO emittiert und nach der Reflektion an einem oder mehreren Zielen bzw. Objekten wieder über eine Empfangsoptik EO und einen Detektor DE empfangen. Damit wird im homodynen Verfahren vom Mischer MI sowohl das Signal $s(t)$ des Signalgenerators SG als auch das in der empfangenen Strahlung beinhaltete Signal der Strahlerzeugung von Treiber und Laser TL verwendet. Das Ergebnis des Mischers MI wird über einen Tiefpaßfilter TF und einen Analog-Digital-Wandler ADC digitalisiert und dem digitalen Signal-Prozessor DSP zur Signalverarbeitung zugeführt. Parallel zum Mischer MI wird durch einen Zähler ZA die totale Phase TP bestimmt und ebenfalls zum digitalen Signal-Prozessor DSP geführt. Eine Steuerung ST kontrolliert den Signalgenerator SG, so dass eine Abweichung der Signalerzeugung vom idealen Verlauf kompensiert werden kann. Durch die Steuerung ST kann somit das vom Signalgenerator SG erzeugte Signal $s(t)$ entweder so variiert werden, dass die tatsächliche Emission einen linearen Frequenzverlauf aufweist oder aber der Fehler wird rein algorithmisch bei der Auswertung berücksichtigt. Darüber hinaus können Korrekturen der Abweichung vom idealen Verhalten und deren rechnerische Berücksichtigung auch kombiniert werden. Über eine Benutzerschnittstelle BS kann die Distanzmessvorrichtung gesteuert werden.

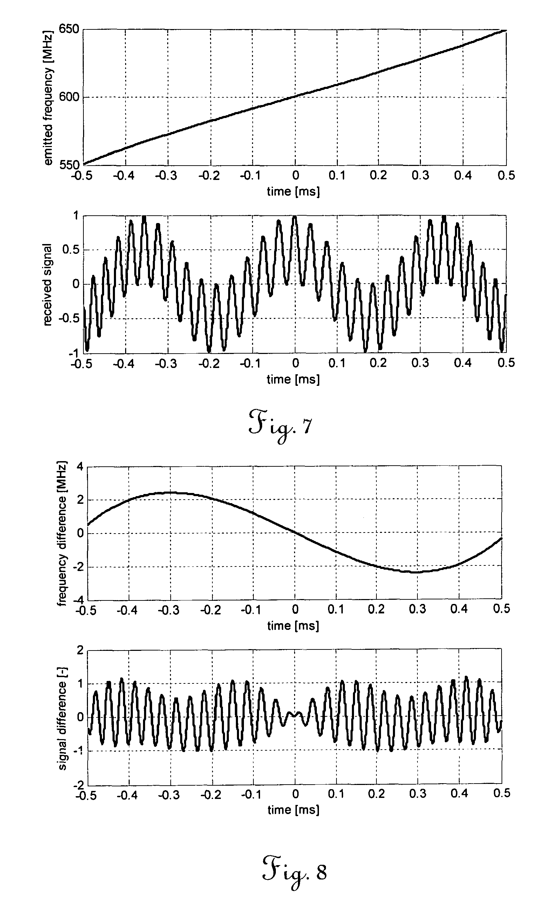

In Fig.2 erfolgt die schematische Darstellung eines zweiten erfindungsgemässen Ausführungsbeispiels mit einem Mischer MI mit optisch detektiertem Signal und einem Zähler ZA für die totale Phase TP. Im Unterschied zur Fig. 1 wird das Signal $s(t)$ des Signalgenerators SG nicht direkt dem Mischer MI zugeführt, sondern es wird die von Treiber und Laser TL emittierte Strahlung über einen Strahlteiler SD auf einen zweiten Detektor DE2 geleitet, dessen Ausgang ist wiederum sowohl mit dem Mischer MI als auch einem Zähler ZA zur Bestimmung der totalen Phase TP verbunden. Diese Anordnung nutzt somit neben dem Echosignal e(t) ein zweites optisch detektiertes Signal $s(t-t_0)$, das über eine interne Strecke geführt wird, so dass sich Einflüsse der Treiber/Laser-Kombination TL gleichermassen auf beide Signale des Mischers MI auswirken.

Ein zu Fig.1 ähnliches Ausführungsbeispiel wird in Fig.3 als schematische Darstellung eines dritten erfindungsgemässen Ausführungsbeispiels mit zwei Mischern, direkter elektrischer Signaleinkopplung und einem Quadraturempfänger gezeigt. Das Signal s( t ) des Signalgenerators SG wird einem ersten Mischer MI1 und einem zweiten Mischer MI2 mit nachgeschalteten Tiefpaßfiltern TF und Analog-Digital-Wandlern ADC zugeführt, wobei das Signal des zweiten Mischers MI2 in einem 90°-Phasenschieber verschoben wird. Das Echosignal e(t) der vom Detektor DE registrierten Strahlung wird sowohl in den ersten Mischer MI1 als auch in den zweiten Mischer MI2 eingekoppelt, so dass insgesamt ein Quadraturempfänger resultiert.

Fig.4 zeigt die schematische Darstellung eines zum zweiten Ausführungsbeispiel von Fig.2 ähnlichen vierten erfindungsgemässen Ausführungsbeispiels mit zwei Mischern, optisch detektiertem Signal $s(t\text{-}t_0)$ und einem Quadraturempfänger. Dieses vierte Ausführungsbeispiel kombiniert den Quadraturempfänger des dritten Ausführungsbeispiels der Fig.3 mit der optischen Detektion des Signals $s(t\text{-}t_0)$ des zweiten Ausführungsbeispiels der Fig.2. Im Unterschied zur Fig.1 wird das Signal s( t ) des Signalgenerators SG nicht direkt dem Quadraturempfänger zugeführt, sondern es wird die von Treiber und Laser TL emittierte Strahlung über einen Strahlteiler SD auf einen zweiten Detektor DE2 geleitet, der wiederum mit dem Quadraturempfänger verbunden ist.

In Fig.5 erfolgt die schematische Darstellung der Erzeugung eines Mischterms durch die Abfolge von Überlagerung UE und Nichtlinearität NL. Diese Erzeugung eines Mischterms stellt eine weitere grundsätzliche Möglichkeit dar, die mit jeder der obigen Ausführungsbeispiele kombiniert werden kann. Insbesondere in Zusammenhang mit dem zweiten Ausführungsbeispiel bieten sich Vorteile, da hiermit ein Detektor eingespart werden kann. Der Ersatz eines Mischers erfolgt durch die Überlagerung UE von Mischsignal $m(t)$ und Echosignal $e(t)$ vor oder auf dem Detektor DE mit nachfolgender Nichtlinearität NL und einem Tiefpassfilter TF. Eine quadratische Nichtlinearität NL erzeugt als Mischterm gerade das gewünschte Produkt und die Tiefpassfilterung TF unterdrückt die unerwünschten Terme. Dieses Prinzip wird zum Beispiel in Dioden- oder FET-Mischern verwendet.

In den folgenden Fig.6-11 werden die Auswirkungen einer Abweichung vom streng linearen Verlauf des Chirps für ein homodynes und ein heterodynes Beispiel gezeigt, aus denen Fehler in der Distanzmessung resultieren können. Ohne Modellierung des Chirpverlaufs muss entweder ein hoher vorrichtungsseitiger Aufwand erfolgen, um die Linearitätsanforderungen einzuhalten, oder es müssen fehlerbehaftete Messungen in Kauf genommen werden.

Die Fig.6-8 zeigen numerische Beispiele für den homodynen Fall. Die Simulationen wurden mittels Matlab berechnet, wobei folgende Werte zugrunde gelegt wurden

| | |
|---|---|
| $f_s$ = 10 MHz | Abtastfrequenz |
| T = 1 ms | Chirpdauer |
| $m$ = 9980 | Anzahl Abtastpunkte |
| $f_0$ = 600 MHz | Mittenfrequenz |
| B = 100 MHz | Chirp-Bandbreite |
| $d_o$ = 0 | Signal-Offset |

Für zwei gleich starke Ziele in den Distanzen 4,5 m und 45 m zeigt Fig.6 die Darstellung des Frequenzverlaufs (oben) und des gemischten und abgetasteten Empfangssignals (unten) für einen perfekten linearen Chirp im homodynen Fall.

In Fig.7 wird eine Störung des idealen Chirps im homodynen Fall mit einem zusätzlichen Term vierter Ordnung in Gleichung (1) dargestellt. Damit sich Anfangs- und Endfrequenz wenig ändern wurde zudem eine leichte Anpassung des quadratischen Terms vorgenommen. Der Störterm in der Phasenfunktion ist somit

$$\Delta\Phi(t) = -6.0 \cdot 10^9\, s^{-2} \cdot t^2 + 1.114 \cdot 10^{16}\, s^{-4} \cdot t^4 \qquad (9)$$

Dargestellt sind in Fig.7 wieder Frequenzverlauf (oben) und gemischtes und abgetastetes Empfangssignal (unten).

Die Darstellung von Differenzen von emittierter Frequenz und empfangenem Signal zwischen gestörtem und idealem Chirp im homodynen Fall erfolgt in Fig.8. Obschon die Chirp-Frequenz nur um maximal 0,42% vom Sollwert abweicht, ist der Unterschied im empfangenen Signal ebenso gross wie das Signal selbst. Dargestellt sind die Differenz der Frequenzen (oben) und die Differenz der Empfangssignale (unten) .

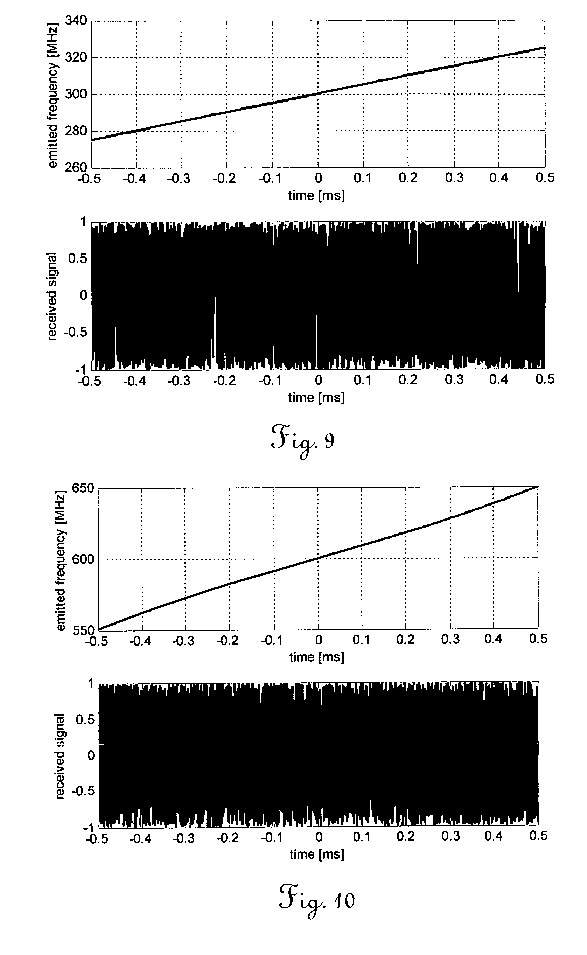

Die Fig.9-11 zeigen numerische Beispiele für den heterodynen Fall. Die Simulationen wurden ebenfalls mittels Matlab berechnet, wobei die gleichen Werte wie im homodynen Fall zugrunde gelegt werden. Die Frequenz $f_1$ des harmonischen Mischsignals beträgt $f_1$ = 500 MHz.

In Fig.9 erfolgt die Darstellung des Frequenzverlaufs (oben) und des Empfangssignals (unten) für den linearen Chirp im heterodynen Fall. Dabei werden dieselben Parameterwerte und dieselben Zieldistanzen wie im obigen homodynen Fall verwendet.

Fig.10 zeigt wie sich die Störung gemäss Gleichung (9) des idealen Chirps im heterodynen Fall auswirkt. Dargestellt sind wieder Frequenzverlauf (oben) und gemischtes und abgetastetes Empfangssignal (unten).

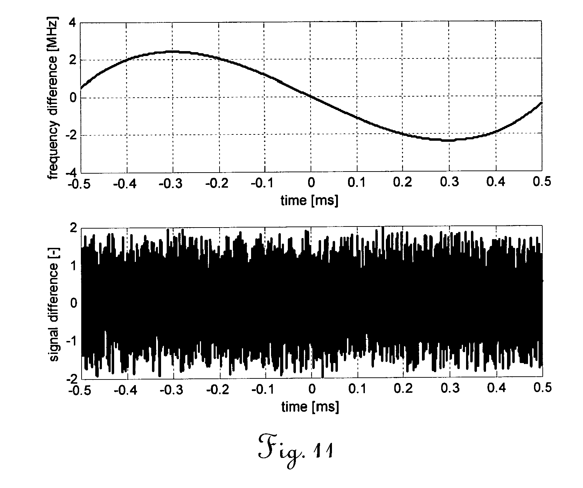

In Fig. 11 werden die Differenzen von emittierter Frequenz und empfangenem Signal zwischen gestörtem und idealem Chirp im heterodynen Fall dargestellt. Obschon die Chirp-Frequenz nur um maximal 0,42% vom Sollwert abweicht, ist der Unterschied im empfangenen Signal wiederum ebenso gross wie das Signal selbst.

Es versteht sich für den Fachmann, dass die verschiedenen Anordnungen von Komponenten oder Prinzipien miteinander in alternativer oder ergänzender Weise kombiniert werden können. Auch können die Ausführungsbeispiele der Vorrichtungen - wie bereits erwähnt - in heterodyner oder homodyner Bauweise, mit Mischern verschiedener Bauart, wie beispielsweise Gilbert-Zellen oder abtastenden Mischern, oder mit Ersetzung eines oder mehrerer Mischer durch die Abfolge von Überlagerung und Nichtlinearität ausgestaltet werden.

**Patentansprüche**

1. Distanzmessverfahren mit den Schritten

   • <u>Aussenden</u> frequenzmodulierter elektromagnetischer Strahlung, insbesondere Licht, auf wenigstens ein zu vermessendes Ziel, wobei ein Chirp als eine der Strahlung aufgeprägte Frequenz durch $f(t) = \dfrac{d\Phi(t)}{dt}$ mit einer Phasenfunktion $\Phi(t)$ beschrieben wird,
   • <u>Empfangen</u> der vom Ziel zurückgestreuten Strahlung,
   • <u>Umwandeln</u> der empfangenen Strahlung in Signale, insbesondere unter homodynem oder heterodynem Mischen,
   • <u>Bestimmen</u> wenigstens einer Distanz zu dem wenigstens einen Ziel aus den Signalen,

   **dadurch gekennzeichnet, dass**
   die Phasenfunktion $\Phi(t)$ durch Parameter $C_j$ modelliert wird, wobei zumindest ein Teil der Parameter aus Messungen, insbesondere der empfangenen Strahlung, bestimmt wird.

2. Distanzmessverfahren nach Anspruch 1,
   **dadurch gekennzeichnet, dass**
   die Mächtigkeit der Menge der Parameter $c_j$ endlich ist.

3. Distanzmessverfahren nach Anspruch 1 oder 2,
   **dadurch gekennzeichnet, dass**
   die Parameter $c_j$ bei jeder Messung bestimmt werden, insbesondere zusammen mit weiteren Systemparametern und/oder einer wenigstens einer Distanz zugeordneten Laufzeit $t_k$.

4. Distanzmessverfahren nach einem der vorangehenden Ansprüche,
   **dadurch gekennzeichnet, dass**
   eine totale Phasenänderung $\Phi_{tot} = \Phi(t_b) - \Phi(t_a)$ im Sendesignal während eines bekannten Zeitintervalls, insbesondere des Messintervalls, gemessen wird, insbesondere durch Zählen der Nulldurchgänge des Sendesignals.

5. Distanzmessverfahren nach einem der vorangehenden Ansprüche,
   **dadurch gekennzeichnet, dass**m
   die Phasenfunktion gemäss $\Phi(t) = \sum_{j=1}^{m} c_j \Phi_j(t)$ als endliche Linearkombination geeigneter Basisfunktionen $\Phi_j(t)$ modelliert wird, insbesondere mit

   - Potenzen,
   - orthogonalen Polynomen,
   - Wavelets oder
   - diskreten Deltafunktionen an den Abtastzeitpunkten als Basisfunktionen.

6. Distanzmessverfahren nach Anspruch 4 oder Anspruch 4 und 5,

**dadurch gekennzeichnet, dass**
für die Koeffizienten $c_1,...,c_m$ bei der Signalauswertung

- eine allgemeine Nebenbedingung
$\Phi(t_b;c_1,...,c_m) - \Phi(t_a;c_1,...,c_m)=$
- eine lineare Nebenbedingung $\sum_{j=1}^{m}\left[\Phi_j(t_b)-\Phi_j(t_a)\right]\cdot c_j = \Phi_{tot}$

berücksichtigt wird.

7. Distanzmessverfahren nach Anspruch 3, 5 oder 6,
   **dadurch gekennzeichnet, dass**
   die Parameter $C_j$, insbesondere zusammen mit den weiteren Systemparametern und den gesuchten Laufzeiten $t_k$, mittels Maximum-Likelihood-Verfahren bestimmt werden, vorzugsweise nach der Methode der kleinsten Fehlerquadrate, gegebenenfalls unter Verwendung der allgemeinen oder linearen Nebenbedingung.

8. Distanzmessverfahren nach einem der Ansprüche 1 bis 4,
   **dadurch gekennzeichnet, dass**
   die Phasenfunktion $\Phi(t)=\Phi(t;c_1,...,c_m)$ mit nichtlinearen Parametern $c_1,...,c_m$ modelliert wird, so dass ein zu lösendes Optimierungsproblem auch bezüglich der Parameter $c_1,...,c_m$ nichtlinear ist.

9. Distanzmessverfahren nach einem der vorangehenden Ansprüche,
   **dadurch gekennzeichnet, dass,**
   insbesondere bei kleiner Abweichung des Chirps von der Linearität, approximative Startwerte für die Laufzeiten $t_k$

   mittels Frequenzanalyse und $f_k(t) = \begin{cases} 2e(t_0 - t_k), & \text{homodyn} \\ d + 2e(t - t_k) - f_0, & \text{heterodyn} \end{cases}$ mit approximativen Werten der Parameter berechnet werden.

10. Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 9, insbesondere wenn das Programm in einem Computer ausgeführt wird.

11. Distanzmessvorrichtung zur Durchführung des Verfahrens nach einem der Ansprüche 1 bis 9 mit wenigstens

    • einer modulierbaren Strahlungsquelle (TL) zur Erzeugung und zur Emission von Strahlung auf ein zu vermessendes Ziel, insbesondere durch Erzeugung von Licht,
    • einem Signalgenerator (SG) zur Modulation der Strahlungsquelle (TL), wobei ein Chirp als eine der Strahlung aufgeprägte Frequenz durch $f(t) = \dfrac{d\Phi(t)}{dt}$ mit einer Phasenfunktion $\Phi(t)$ beschrieben wird,

    • einem Detektor (DE,DE1,DE2) zum Empfang und zur Umwandlung von rückgestreuter Strahlung in Signale,
    • einem Signal-Prozessor, insbesondere einem digitalen Signal-Prozessor (DSP), zur Verarbeitung der Signale,
    • insbesondere mit einem Mischer (MI,MI1,MI2) zur Durchführung eines homodynen oder heterodynen Mischverfahrens,

    **dadurch gekennzeichnet, dass**
    Signalgenerator (SG), Detektor (DE,DE1,DE2) und Signal-Prozessor so angeordnet und ausgelegt sind, dass zumindest ein Teil der Parameter $C_j$ zur Modellierung der Phasenfunktion $\Phi(t)$ aus Messungen, insbesondere der empfangenen Strahlung, bestimmt wird.

12. Distanzmessvorrichtung nach Anspruch 11,
    **dadurch gekennzeichnet, dass**
    Signalgenerator (SG), Detektor (DE,DE1,DE2) und Signal-Prozessor so angeordnet und ausgelegt sind, dass die Parameter $C_j$ bei jeder Messung bestimmt werden, insbesondere zusammen mit weiteren Systemparametern und/oder einer wenigstens einer Distanz zugeordneten Laufzeit $t_k$.

**13.** Distanzmessvorrichtung nach einem der Ansprüche 11 oder 12,
**gekennzeichnet durch**
eine Vorrichtung zur Bestimmung der totalen Phase (TP) des Sendesignals, insbesondere einen Zähler (ZA).

**14.** Distanzmessvorrichtung nach einem der Ansprüche 11 bis 13,
**gekennzeichnet durch**
eine Abfolge von

• optischer oder elektrischer Überlagerung (UE) der rückgestreuten Strahlung mit einem Mischsignal und
• einer Nichtlinearität (NL), insbesondere einer quadratischen Nichtlinearität,

zur Erzeugung eines Mischterms, insbesondere mit einem nachfolgenden Tiefpaßfilter (TF).

**15.** Distanzmessvorrichtung nach einem der Ansprüche 11 bis 14,
**gekennzeichnet durch**
eine Steuerung (ST), welche den Signalgenerator (SG) so ansteuert, dass Abweichungen des Chirps von einem linearen Frequenzverlauf, insbesondere in Echtzeit, kompensiert werden.

Fig. 1

Fig. 2

Fig. 3

Fig. 4

m(t)        e(t)

UE

DE

NL

TF

d(t)

$\mathcal{F}ig.$ 5

$\mathcal{F}ig.$ 6

13

Fig. 7

Fig. 8

Fig. 9

Fig. 10

$\mathcal{Fig}$. 11

**Europäisches Patentamt**

# EUROPÄISCHER RECHERCHENBERICHT

**Nummer der Anmeldung**

EP 04 02 4127

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 464 982 A (EADS DEUTSCHLAND GMBH) 6. Oktober 2004 (2004-10-06) <br><br> * das ganze Dokument * <br> ----- | 1-3,5, 7-12,14, 15 | G01S17/32 <br> G01S7/497 <br> G01S7/491 <br> G01S7/40 |
| X | EP 0 501 566 A (PHILIPS ELECTRONICS UK LIMITED; N.V. PHILIPS' GLOEILAMPENFABRIEKEN) 2. September 1992 (1992-09-02) <br> * Zusammenfassung; Ansprüche 1,8; Abbildung 1 * <br> * Spalte 2, Zeile 25 - Spalte 3, Zeile 13 * <br> * Spalte 8, Zeile 26 - Spalte 11, Zeile 4 * <br><br> ----- | 1-3,5,7, 8,10-12, 14,15 | |
| A | EP 1 316 815 A (MURATA MANUFACTURING CO., LTD) 4. Juni 2003 (2003-06-04) * Zusammenfassung; Anspruch 1 * <br> ----- | 15 | |

**RECHERCHIERTE SACHGEBIETE (Int.Cl.7)**

G01S

| A | KULPA K S ET AL: "The simple method for analysis of nonlinear frequency distortions in FMCW radar" MICROWAVES, RADAR AND WIRELESS COMMUNICATIONS. 2000. MIKON-2000. 13TH INTERNATIONAL CONFERENCE ON MAY 22-24, 2000, PISCATAWAY, NJ, USA,IEEE, Bd. 1, 22. Mai 2000 (2000-05-22), Seiten 235-238, XP010537348 ISBN: 83-906662-3-5 <br> ----- <br><br> -/-- | | |

Der vorliegende Recherchenbericht wurde für alle Patentansprüche erstellt

| Recherchenort | Abschlußdatum der Recherche | Prüfer |
|---|---|---|
| München | 1. März 2005 | Grübl, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**Europäisches Patentamt**

# EUROPÄISCHER RECHERCHENBERICHT

Nummer der Anmeldung

EP 04 02 4127

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | KARLSSON C J ET AL: "Linearization of the frequency sweep of a frequency-modulated continuous-wave semiconductor laser radar and the resulting ranging performance" APPLIED OPTICS OPT. SOC. AMERICA USA, Bd. 38, Nr. 15, 20. Mai 1999 (1999-05-20), Seiten 3376-3386, XP002319569 ISSN: 0003-6935 * Zusammenfassung * * Kapitel 1. * | 1,10,11 | |
| A | PELEG S ET AL: "Signal estimation using the discrete polynominal transform" STATISTICAL SIGNAL AND ARRAY PROCESSING. MINNEAPOLIS, APR. 27 - 30, 1993, PROCEEDINGS OF THE INTERNATIONAL CONFERENCE ON ACOUSTICS, SPEECH, AND SIGNAL PROCESSING (ICASSP), NEW YORK, IEEE, US, Bd. VOL. 4, 27. April 1993 (1993-04-27), Seiten 424-427, XP010110820 ISBN: 0-7803-0946-4 | | |
| A | PELEG S ET AL: "Linear FM signal parameter estimation from discrete-time observations" IEEE TRANSACTIONS ON AEROSPACE AND ELECTRONIC SYSTEMS USA, Bd. 27, Nr. 4, 4. Juli 1991 (1991-07-04), Seiten 607-616, XP002319570 ISSN: 0018-9251 | | |

-/--

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| München | 1. März 2005 | Grübl, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

### EUROPÄISCHER RECHERCHENBERICHT

**Europäisches Patentamt**

**Nummer der Anmeldung**

EP 04 02 4127

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | DJURIC P M ET AL: "Parameter estimation of chirp signals" IEEE TRANSACTIONS ON ACOUSTICS, SPEECH AND SIGNAL PROCESSING USA, Bd. 38, Nr. 12, 12. Dezember 1990 (1990-12-12), Seiten 2118-2126, XP002319571 ISSN: 0096-3518 ----- | | |

**RECHERCHIERTE SACHGEBIETE (Int.Cl.7)**

Der vorliegende Recherchenbericht wurde für alle Patentansprüche erstellt

| Recherchenort | Abschlußdatum der Recherche | Prüfer |
|---|---|---|
| München | 1. März 2005 | Grübl, A |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 02 4127

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2005

| Im Recherchenbericht angeführtes Patentdokument | | Datum der Veröffentlichung | Mitglied(er) der Patentfamilie | | Datum der Veröffentlichung |
|---|---|---|---|---|---|
| EP 1464982 | A | 06-10-2004 | DE<br>EP<br>US | 10315012 A1<br>1464982 A2<br>2005001761 A1 | 28-10-2004<br>06-10-2004<br>06-01-2005 |
| EP 0501566 | A | 02-09-1992 | EP<br>JP<br>US | 0501566 A1<br>5066269 A<br>5187484 A | 02-09-1992<br>19-03-1993<br>16-02-1993 |
| EP 1316815 | A | 04-06-2003 | JP<br>EP<br>US | 2003167046 A<br>1316815 A1<br>2003102998 A1 | 13-06-2003<br>04-06-2003<br>05-06-2003 |

EPO FORM P0461

Für nähere Einzelheiten zu diesem Anhang : siehe Amtsblatt des Europäischen Patentamts, Nr.12/82